# EUROPEAN PATENT APPLICATION

(11) **EP 1 185 050 A1**
(43) Date of publication of application: **06.03.2002**
(21) Application number: 00118970.3
(22) Date of filing: 01.09.2000
(51) Int. Cl.: H04L 29/06, H04L 12/24, G06F 17/60, G07F 7/00, B67D 5/06, B67D 5/14

(54) **Self configuring vending system**

(71) Applicant: Marconi Commerce Systems S.r.L., 50145 Firenze (IT)
(72) Inventor: Carapelli, Giovanni, 50142 Firenze (IT)
(74) Representative: Fitchett, Stuart Paul

(57) **Abstract**

The present invention describes a vending system comprising a master unit (MST) and at least one service provider unit (SPR) connected through a network, comprising means to automatically configure a communication interface between said service provider unit (SPR) and a new client unit (CLN) when the latter is connected to the network.

## Description

### Field of the invention

The present invention relates to a vending system intended to reduce effort to configure and update the system during setup or maintenance.

### Background of the art

Over the past years several systems comprising micro controlled devices have been proposed.

The devices of these systems have been connected each other with many different physical and software media as custom, proprietary protocol.

The use of custom, proprietary protocol enforced to a very complex setup phase to enable all the system components to work properly together.

That means high cost for startup and maintenance and a complex setup procedure in which a large number of information have to be provided to the system (type of the supplemented device, software release, functions to be enable/disabled ..). furthermore, all these procedures were different for each manufacturer even if the device to be supplemented was basically the same.

### Aim of the invention

A first aim of the invention is to overcome the prior art systems drawbacks and to provide a manufacturer independent scheme.

### Summary of the invention

These aims have been reached according to the invention by a communication system as claimed in the annexed claims.

### List of drawings

The advantages of the system of the invention will be evident from the following description and from the annexed drawings, given as a non limiting example, in which:

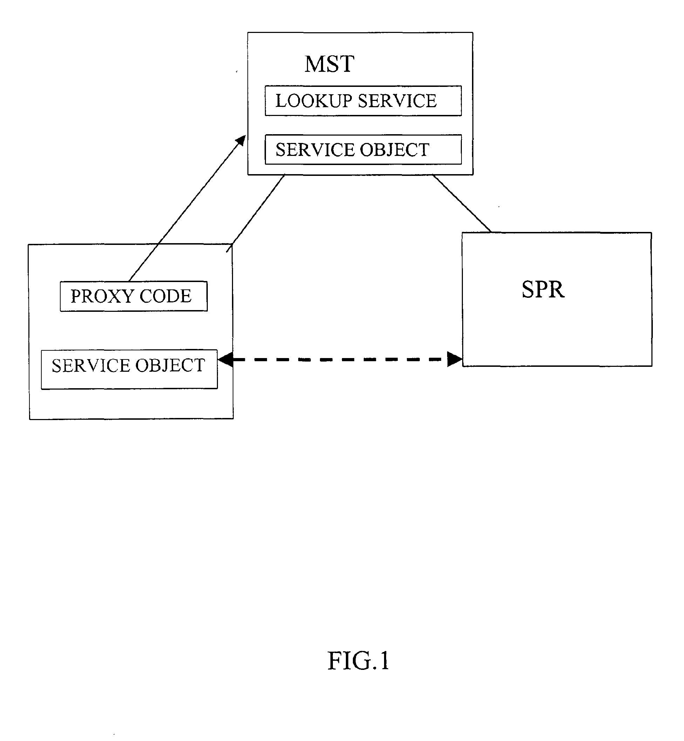

- Figure 1 is a scheme of a system according to the invention

### Detailed description of the invention

With reference to the preferred embodiment of Figure1, a non limiting example of the system of the invention is disclosed, comprising a master unit MST and a number of service provider units SPR connected to MST by a suitable communication interface, for example by a conventional cable connection.

In Figure 1 there is shown a preferred embodiment of the system, where the unit MST is a controller unit of a local network, for example a network of vending machines and other service providers of a vending system.

According to the scheme of Figure1 , the MST and SPR units are controlled by a microprocessor unit running an operating system with a layer structured architecture and they are connected each other through a local network.

The operating system comprises:
- a communication infrastructure layer; able to provide the system of the connectivity function and the communication protocols of the network;
- a discovery and lookup layer able to discover the presence of any unit connected to the network, to register and to make available the system resources:

- a service layer where the driver software of the service providers SPR, including all the features and attributes of the service and the proxy object of the service is loaded.

When the system has to be supplemented of a new unit CLN, the latter is connected to the network and joins the discovery service of MST, transmitting its driver software including its proxy code, and a service request, containing a request of all the system resources that the unit needs.

Through the discovery software the system finds out that certain resources have been requested from a new device CLN and where they are present in the system, they are made available to the client through the lookup software.

The lookup layer of the MST unit registers the availability in the system of the requested service , associates it to all the necessary driver software loaded in the service layer, and sends a copy of the requested service object, comprising the proxy codes of the requested services, to the CLN unit so that the latter can interact directly with the service providers SPR via the downloaded service object. Preferably the system units are connected through a TCP/IP protocol enabled network and the proxy codes include a IP address of the corresponding service or client unit.

In a preferred embodiment of the invention said operating system is a JAVA™ operating system and said architecture is a JINI™ based layer architecture.

Advantageously, the system of the invention is able to be supplemented of any type of device or service by simply providing the MST unit of the driver software corresponding to that service or device.

At the same time, the clients of a such system will be able to communicate each other provided that their driver software is loaded into the service layer of a MST unit.

Furthermore such "upgrading" of the system can be remotely controlled by a controller connected with the MST unit, for example via the internet, and able to transmit to the MST unit the needed driver software.

The present invention has been described with reference to preferred embodiments, anyway, equivalent modifications can be made without outgoing from the scope of the invention.

## Claims

1. Vending system comprising a master unit (MST) and at least one service provider unit (SPR) connected through a network, comprising means to automatically configure a communication interface between said service provider unit (SPR) and a new client unit (CLN) when the latter is connected to the network.

2. System according to claim 1 wherein said means to automatically configure a communication interface between said client unit and said service provider unit comprise:
driver software of the client unit provided at the client unit and transmitted to the master unit through said interfaces (RF);
driver software of the service provider unit provided at the master unit;
means to associate said driver software of the client unit and of the service provider unit in order to automatically configure a communication interface between said client unit and said service provider unit.

3. System according to claim 1, wherein said master unit, said client unit and said service provider unit are connected through a TCP/IP enabled network.

4. System according to claim 3, wherein said driver software of the client unit and of the service provider unit comprises a proxy code respectively of the client unit and of the service provider unit.

5. System according to claim 2, wherein said means to associate said driver software of the client unit and of the service provider unit comprise a discovery and lookup software able to discover, join and make available to each other said client and service unit.

6. System according to claim 1 wherein said driver software of said service provider unit is downloaded by said master unit from a remote controller connected to said network.

7. System according to claim 6, wherein said controller in connected to said network through the Internet.

8. System according to at least one of claims 1-7, wherein said master unit is a control station of a gas station and at least one of said service provider units is a fuel dispenser.
